# EUROPÄISCHE PATENTANMELDUNG

(11) **EP 2 947 395 A1**
(43) Veröffentlichungstag der Anmeldung: **25.11.2015**
(21) Anmeldenummer: 15167519.6
(22) Anmeldetag: 13.05.2015
(51) Int. Cl.: F24F 5/00, B05B 17/08, F24F 6/14

(54) **Vorrichtung zur lokalen Beeinflussung von Temperatur und Feuchte in einem Raum**

(30) Priorität: 22.05.2014 DE 102014107237
(71) Anmelder: Imtech Deutschland GmbH & Co. KG, 22041 Hamburg (DE)
(72) Erfinder: Nolte, Dirk, 91550 Dinkelsbühl (DE); Thiel, Peter, 22459 Hamburg (DE); Kruse, Helge, 25488 Holm (DE)
(74) Vertreter: RGTH

(57) **Zusammenfassung**

Um eine Vorrichtung 100, welche Temperatur und Feuchte in einem Raum, insbesondere im Industriebereich, lokal beeinflusst, umfassend mindestens ein Wärmeübertragungselement 10 mit mindestens zwei Wärmeübertragungsflächen 12, 13, ein flüssiges Wärmeübertragungsmedium 16, mindestens ein Verteilelement 17 und einen Sammelbereich 19 bereitzustellen, wird vorgeschlagen, dass die Vorrichtung 100 einen offenen Hohlraum 24, insbesondere zur Bildung eines Luftkanals, und kopf- und fußseitige Öffnungen 20, 21 aufweist, wobei an den Hohlraum 24 die mindestens eine Wärmeübertragungsfläche 13 angrenzt, und wobei die Öffnungen 20, 21 in den Hohlraum 24 münden, und dass das mindestens eine Verteilelement 17 zum Verteilen des flüssigen Wärmeübertragungsmediums 16 auf die mindestens eine Wärmeübertragungsfläche 12 mindestens eine Düse 17a aufweist, die um einen Winkel (α) gegenüber einer zur Wärmeübertragungsfläche 12 senkrechten Achse geneigt ist.

## Beschreibung

### Beschreibung

Die vorliegende Erfindung bezieht sich auf eine Vorrichtung zur lokalen Beeinflussung von Temperatur und Feuchte in einem Raum, insbesondere im Industriebereich, beispielsweise in Produktionsanlagen, gemäß dem Oberbegriff des Anspruchs 1.

### Stand der Technik

Eine Vorrichtung zur Kühlung und Entfeuchtung von Luft ist beispielsweise aus der DE 10 2005 034 141 A1 bekannt. Dort ist eine Vorrichtung zum Kühlen und Entfeuchten von Luft eines Raums, umfassend eine Bearbeitungseinheit, um die Kühlflüssigkeit derart zu bearbeiten, dass sie geeignet ist, beim Kontakt mit der Luft diese zu entfeuchten und/oder zu kühlen, wobei eine über die Verdunstungskälte hinausgehende Kühlung erreichbar ist, eine Verteilungseinheit, welche geeignet ist, die Kühlflüssigkeit an der Luft mit direktem Kontakt vorbeiströmen zu lassen, eine Sammeleinheit, welche geeignet ist, die an der Luft vorbeigeströmte Kühlflüssigkeit der Bearbeitungseinheit wieder zuzuführen.

Die US 6,279,835 B1 offenbart einen Wandbrunnen für den Einsatz in Wohn- und Gewerbebereich. Der Wandbrunnen umfasst einen Stützrahmen und einen Auffangbehälter, in dem ein Umlaufpumpsystem angeordnet ist. Eine Wasserleitfläche ist an dem Stützrahmen angeordnet, wobei das Wasser an dessen Oberfläche in den Auffangbehälter runterläuft.

### Darstellung der Erfindung: Aufgabe, Lösung, Vorteile

Der Erfindung liegt die Aufgabe zugrunde, eine Vorrichtung bereitzustellen, welche Temperatur und Feuchte in einem Raum, insbesondere im Industriebereich, lokal beeinflusst. Diese Aufgabe wird durch die im Anspruch 1 angegebene Merkmalskombination gelöst. Bevorzugte Weiterbildungen der erfindungsgemäßen Vorrichtung sind in den abhängigen Ansprüchen angegeben.

Erfindungsgemäß wird bei einer Vorrichtung zur lokalen Beeinflussung von Temperatur und Feuchte in einem Raum, insbesondere im Industriebereich, umfassend mindestens ein Wärmeübertragungselement mit mindestens zwei Wärmeübertragungsflächen, ein flüssiges Wärmeübertragungsmedium, mindestens ein Verteilelement und einen Sammelbereich, vorzugsweise in Form einer Wanne, vorgeschlagen, dass die Vorrichtung einen offenen Hohlraum, insbesondere zur Bildung eines Luftkanals, und kopf- und fußseitige Öffnungen aufweist, wobei an den Hohlraum die mindestens eine Wärmeübertragungsfläche angrenzt, und wobei die Öffnungen in den Hohlraum münden, und dass das Verteilelement zum Verteilen des flüssigen Wärmeübertragungsmediums auf die mindestens eine Wärmeübertragungsfläche mindestens eine Düse aufweist, die um einen Winkel (α) gegenüber einer zur Wärmeübertragungsfläche senkrechten Achse geneigt ist.

Der Wärmeaustausch zur Erreichung eines Kühl- oder Erwärmungseffektes erfolgt im Wesentlichen durch direkten Kontakt des flüssigen Wärmeübertragungsmediums, das vorzugsweise Wasser ist, mit der Umgebungsluft. Das Verteilelement verteilt, vorzugsweise besprüht, das flüssige Wärmeübertragungsmedium auf die mindestens eine Wärmeübertragungsfläche, so dass ein dünner Fluidfilm auf der besprühten Oberfläche der Wärmeübertragungsfläche gebildet wird und das auf die Wärmeübertragungsfläche verteilte Wärmeübertragungsmedium an der Wärmeübertragungsfläche der Schwerkraft folgend nach unten fließt, wobei der Fluidfilm die gesamte Wärmeübertragungsfläche benetzt, um eine größtmögliche und optimale Wärmeübertragung über Strahlung und Konvektion zu gewährleisten.

Der Wärmeaustausch zwischen Wärmeübertragungsmedium und Umgebungsluft erfolgt bei den aus dem Stand der Technik bekannten Verfahren durch den direkten Kontakt mit einem beidseitig vollflächig benetzten Wärmeübertragungselement (Membran). Dadurch, dass bei der erfindungsgemäßen Vorrichtung mindestens ein offener Hohlraum zur Bildung eines Luftkanals vorgesehen ist, entstehen im Hohlraum weitere Oberflächen, die zur Wärmeübertragung, insbesondere zur Konvektion, genutzt werden können. Im Betrieb nimmt das Wärmeübertragungselement (Membran) die Wärme des herabfließenden flüssigen Wärmeübertragungsmediums auf, wobei durch Einstellung der Temperatur des flüssigen Wärmeübertragungselementes die Temperatur des Wärmeübertragungselementes reguliert werden kann. Durch Kühlung (bzw. Erwärmung) der Luft im Hohlraum entsteht eine Konvektionswirkung. Durch die Kombination von Wärmeübertragungsmedien in direktem Kontakt mit der Umgebungsluft und gleichzeitigem Wärmeaustausch von angesaugter Luft im Hohlraum stellt die erfindungsgemäße Vorrichtung eine Kühl- / Heizeinrichtung mit hoher Effizienz zur lokalen Luftbehandlung dar.

Ferner ist es vorteilhaft, dass mindestens eine Wärmeübertragungsfläche zweckmäßig eine glatte Oberfläche und eine Oberflächenstruktur zur optimalen Ableitung des flüssigen Wärmeübertragungsmediums aufweist.

In einer weiteren bevorzugten Ausführungsform grenzen mindestens zwei Wärmeübertragungsflächen an den Hohlraum. Die Wärmeübertragungsflächen können vorzugsweise plattenförmig ausgebildet sein, wobei sich die Wärmeübertragungselemente vorzugsweise gegenüberliegend angeordnet sind. Des Weiteren können die Wärmeübertragungsflächen vorzugsweise in einem definierten Abstand im Wesentlichen parallel zueinander angeordnet sein.

Eine weitere zweckmäßige Ausgestaltung der Anordnung ist dadurch gekennzeichnet, dass die Vorrichtung ein erstes Mittel zur Verstärkung der Konvektionswirkung im Hohlraum des Wärmeübertragungselementes, vorzugsweise mindestens ein Luftleitelement, insbesondere einen Luftleitwinkel, aufweist, wobei das erste Mittel vorzugsweise in einem Bereich angeordnet ist, wo die Umgebungsluft in den Hohlraum hineinströmt, vorzugsweise im Bereich der kopfseitigen Öffnung. Durch die Anordnung des ersten Mittels kann die Luftströmung im Hohlraum gezielt in eine bestimmte Richtung, insbesondere zur fußseitigen Öffnung hin gelenkt werden, und die gekühlte bzw. erwärmte Luft kann im Wesentlichen aus der fußseitigen Öffnung herausströmen.

In einer weiteren bevorzugten Ausführungsform weist die Vorrichtung ein zweites Mittel zur Verstärkung der Konvektionswirkung im Hohlraum des Wärmeübertragungselementes, vorzugsweise einen Ventilatorkasten mit mindestens einem Ventilator, im Bereich der kopfseitigen Öffnung der Vorrichtung auf, wobei die Leistung des mindestens einen Ventilators durch Drehzahlsteuerung bzw. durch Zu- und Abschalten des mindestens einen Ventilators regelbar ist. Hierbei wird von den Ventilatoren zusätzlich angesaugte Luft in den Hohlraum gedrückt und der Konvektionseffekt erheblich verstärkt. Die Vorrichtung erfährt dadurch eine weitere Leistungssteigerung im Kühl- und Heizbetrieb, so dass sie für den Einsatz zur lokalen Luftbehandlung in industriellen Produktionsbereichen besonders geeignet ist. Zweckmäßigerweise weist der Ventilatorkasten einen Luftvolumenstrom von 300 bis 600 m³/h auf.

In einer weiteren bevorzugten Ausführungsform verteilt das Verteilelement das flüssige Wärmeübertragungsmedium auf die mindestens eine dem Hohlraum abgewandten Außenoberfläche der mindestens einen Wärmeübertragungsfläche, wobei diese Außenoberfläche als Membran ausgebildet ist. Die mindestens eine an den Hohlraum angrenzende Wärmeübertragungsfläche wird somit als Konvektionsfläche genutzt.

Mit zunehmender Lauflänge des Fluidfilms auf der Membranfläche kommt es häufig strömungsmechanisch bedingt zu Einschnürungen des Fluidfilmes, der sich in Richtung Membranmitte zusammenzieht und somit die Membranfläche nicht mehr vollständig bedeckt. Um dies zu vermeiden, ist in einer weiteren zweckmäßigen Ausgestaltung der Vorrichtung vorgesehen, dass auf der mindestens einen Wärmeübertragungsfläche, auf der der Fluidfilm gebildet werden soll, mindestens zwei Stabilisierungselemente, die vorzugsweise streifenförmig ausgebildet sind, zur Stabilisierung des dünnen Fluidfilms auf der Oberfläche des Wärmeübertragungselementes, vorzugsweise parallel zur Strömungsrichtung des flüssigen Wärmeübertragungsmediums angebracht sind, wobei die Stabilisierungselemente bevorzugt über die komplette Membranhöhe angebracht sind und formschlüssig und/oder wasserdicht mit der Membran verbunden sind. Ferner kann die Dicke der Stabilisierungselemente je nach gewünschter Fluidfilmdicke des flüssigen Wärmeübertragungsmediums eingestellt werden. Durch das dann geänderte Kräftegleichgewicht an der Phasengrenze zwischen Luft, flüssigem Wärmeübertragungsmedium und Membran, ist der Fluidfilm stabil. Die Stabilität wird im Gegensatz zu einer Membran ohne Stabilisierungsstreifen dadurch erreicht, dass sich die Richtungen der Kräfte an der Phasengrenze ändern. Die aufgesetzten Stabilisierungstreifen werden vorzugweise aus dem gleichen Werkstoff gefertigt wie die Membran.

Weiter bevorzugt wird in einer vorteilhaften Ausführung der Vorrichtung, dass der Sammelbereich mit mindestens einem Abfluss vorgesehen ist, so dass das flüssige Wärmeübertragungsmedium aus dem Sammelbereich wieder abführbar ist. Vorteilhafterweise ist eine zweifache Auffangwanne mit je doppeltem Abfluss für hohe Betriebssicherheit im industriellen Einsatz vorgesehen. D. h. jede Auffangwanne weist zwei Abflüsse auf. In einer ersten Auffangwanne wird das an der Membran abfließende flüssige Wärmeübertragungsmedium gesammelt und über die Abflüsse aus dem Sammelbereich abgeführt. Eine zweite Auffangwanne, die unter der ersten Auffangwanne angeordnet ist, sammelt das an der Vorrichtung, insbesondere an der Außenoberfläche der ersten Wanne, anfallende Kondensat und das gesammelte Kondensat wird über die Abflüsse aus dem Sammelbereich abgeführt. Vorteilhafterweise können die Verteilelemente sowie die Abflüsse der Vorrichtung an den vorhandenen Infrastrukturleitungen einfach angeschlossen werden.

Das Verteilelement ist vorzugsweise röhrenförmig ausgebildet, wobei verschiedene Querschnittsformen in Betracht kommen. Vorteilhafterweise beträgt der Innenquerschnitt des Verteilelementes mindestens das 2,5-fache der Gesamtsumme der Innenquerschnitte der Düsen.

Ferner kann das Verteilelement zweckmäßig mindestens zwei Düsen aufweisen, die bevorzugt voneinander definiert beabstandet sind. Der Abstand wird so gewählt, dass eine Bildung des Fluidfilms gewährleistet ist.

Ferner ist vorteilhaft, dass die Vorrichtung einen Werkstoff umfasst, der eine gute Korrosionsbeständigkeit aufweist. Dieser Werkstoff kann vorzugsweise metallisch, insbesondere Edelstahl oder Aluminium sein. Dies hat den Vorteil, dass die Vorrichtung aus derartigen Werkstoffen keine Erhöhung der Brandlast darstellt und gut nass zu reinigen.

Die Vorrichtung kann ferner sowohl bodenstehend als auch hängend montierbar ausgebildet sein. Beispielsweise kann die Vorrichtung hängend in der Mitte des Arbeitsbereichs, insbesondere beim industriellen Einsatz zwischen Produktionslinien montiert werden, so dass die Konvektionswirkung für beide Arbeitsbereiche ausgenutzt werden kann.

### Kurze Beschreibung, der Zeichnung

Ein Ausführungsbeispiel der Erfindung wird nachstehend anhand der Zeichnung näher erläutert. Es zeigen schematisch:
Fig. 1 zeigt eine schematische Frontansicht einer Vorrichtung gemäß einem Ausführungsbeispiel,
Fig. 2 zeigt eine schematische Querschnittsansicht entlang der in Fig. 1 gezeigten Schnittlinie A - A und
Fig. 3 zeigt eine schematische Querschnittsansicht entlang der in Fig. 1 gezeigten Schnittlinie B - B.

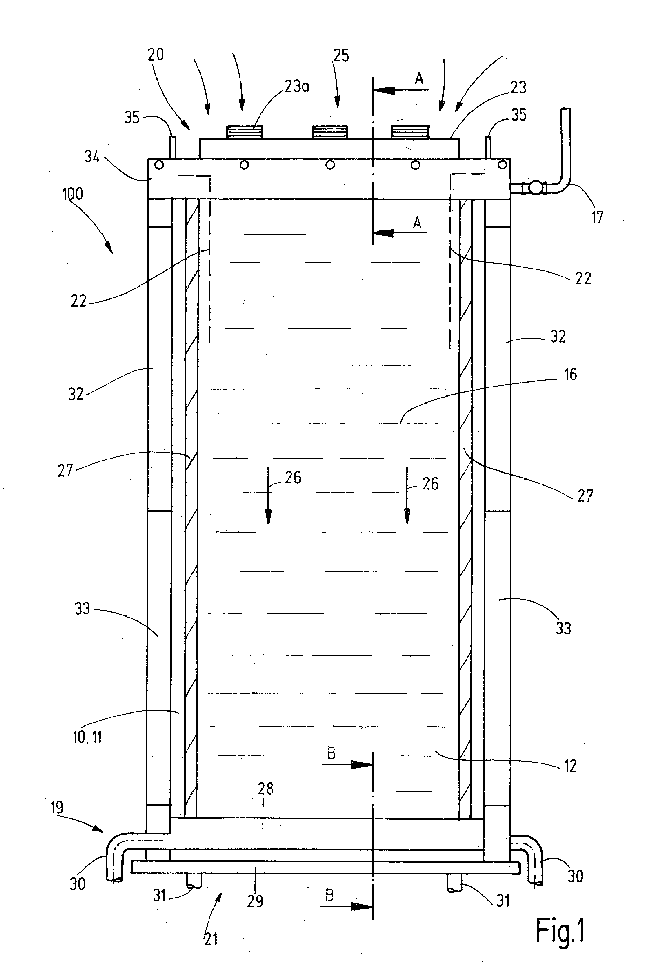

Die Fig. 1 zeigt eine Vorrichtung 100 zur lokalen Beeinflussung von Temperatur und Feuchte in einem Raum nach einem Ausführungsbeispiel. Die in Fig. 1 gezeigte Vorrichtung 100 umfasst zwei Wärmeübertragungselemente 10, 11 mit je zwei Wärmeübertragungsflächen 12, 13, 14, 15, wobei auf Fig. 1 nur eine Wärmeübertragungsfläche 12 gezeigt ist, und ein flüssiges Wärmeübertragungsmedium 16. Ferner umfasst die Vorrichtung 100 zwei Verteilelemente 17, 18, einen Sammelbereich 19 und zwei Öffnungen 20, 21, eine kopfseitige 20 und eine fußseitige Öffnung 21.

Die Wärmeübertragungselemente 10, 11 sind parallel zueinander gegenüberliegend beabstandet angeordnet, wobei die Wärmeübertragungsflächen 12, 13, 14, 15 plattenförmig ausgebildet sind.

Die Vorrichtung 100 umfasst weiterhin ein erstes Mittel 22 und ein zweites Mittel 23 zur Verstärkung der Konvektionswirkung im Hohlraum 24, wobei das erste Mittel 22 zur Verstärkung der Konvektionswirkung als Luftleitwinkel 22 ausgebildet und das zweite Mittel 23, das als Ventilatorkasten ausgebildet ist, mit drei Ventilatoren 23a ausgestattet ist. Der Ventilatorkasten 23 ist im Bereich der kopfseitigen Öffnung 20 auf den Wärmeübertragungselementen 10, 11 aufgesetzt. Durch die Ventilatoren im Ventilatorkasten 23 wird die Umgebungsluft in den Hohlraum 24 geblasen. Die beiden Luftleitwinkel 22 sind im Bereich der kopfseitigen Öffnung 20 derart angeordnet, dass die beiden Luftleitwinkel 22 den Hohlraum 24 zwischen den beiden Wärmeübertragungselementen 10, 11 jeweils seitlich von oben abschließen. Dadurch entsteht ein Schacht, der die Konvektionswirkung noch verstärkt und insbesondere in der Kühlanwendung den Luftstrom gezielt vertikal nach unten zur fußseitigen Öffnung 21 hin lenkt, bevor die gekühlte Luft an den Seiten der Wärmeübertragungselemente 10, 11 aus der Vorrichtung herausströmt. D. h. die im Hohlraum 24 gekühlte bzw. erwärmte Luft strömt im Wesentlichen aus der fußseitigen Öffnung 25 heraus. Dieser Effekt wird durch die Schachausbildung im oberen Viertel der Wärmeübertragungsfläche 13, 14 erzielt. Die Luftstromrichtung ist durch Pfeile 25 dargestellt.

Die Verteilelemente 17, 18 sind im Bereich der kopfseitigen Öffnung 20 angeordnet, so dass die Verteilelemente 17, 18 das flüssige Wärmeübertragungsmedium 16 auf den oberen Bereich der Wärmeübertragungsfläche 12, 15 besprüht. Das flüssige Wärmeübertragungsmedium 16 wird an der Wärmeübertragungsfläche 12, 15 von oben in vertikaler Richtung nach unten in Richtung des Sammelbereichs 19 geleitet. Die Strömungsrichtung des flüssigen Wärmeübertragungsmediums 16 ist durch Pfeile 26 dargestellt. Dabei wird das flüssige Wärmeübertragungsmedium 16 mit einer entsprechenden Anzahl von Düsen 17a, 18a besprüht, so dass ein dünner Fluidfilm auf der Wärmeübertragungsflächen 12, 15 gebildet wird. Zur Stabilisierung des dünnen Fluidfilms werden je zwei streifenförmige Stabilisierungselemente 27 an den Rändern auf der Wärmeübertragungsflächen 12, 15 angebracht, wobei die Stabilisierungselemente 27 über die komplette Höhe der Wärmeübertragungsfläche 12, 15 angebracht sind. Durch die beidseitige Anbringung von den Stabilisierungsstreifen 27 über die komplette Höhe der Wärmeübertragungsfläche 12, 15 wird die strömungsmechanisch bedingte Einschnürung des Fluidfilmes verhindert, und es bildet sich ein gleichmäßiger, stabiler Fluidfilm auf den gesamten Wärmeübertragungsflächen 12, 15 aus.

Ferner ist der Sammelbereich 19 als zweifache Auffangwanne 28, 29 mit je doppeltem Abfluss 30, 31 ausgebildet. Die Vorrichtung 100 weist des Weiteren ein erstes und ein zweites Stützelement 32, 33 und eine Abdeckplatte 34 für die Verteilelemente 17, 18 auf.

Die Vorrichtung 100 ist hängend montierbar ausgebildet. Zur Montage sind an der Vorrichtung 100 zwei Montageelemente 35, die beispielsweise als Aufhängeöse 35 ausgestaltet sein können, angeordnet.

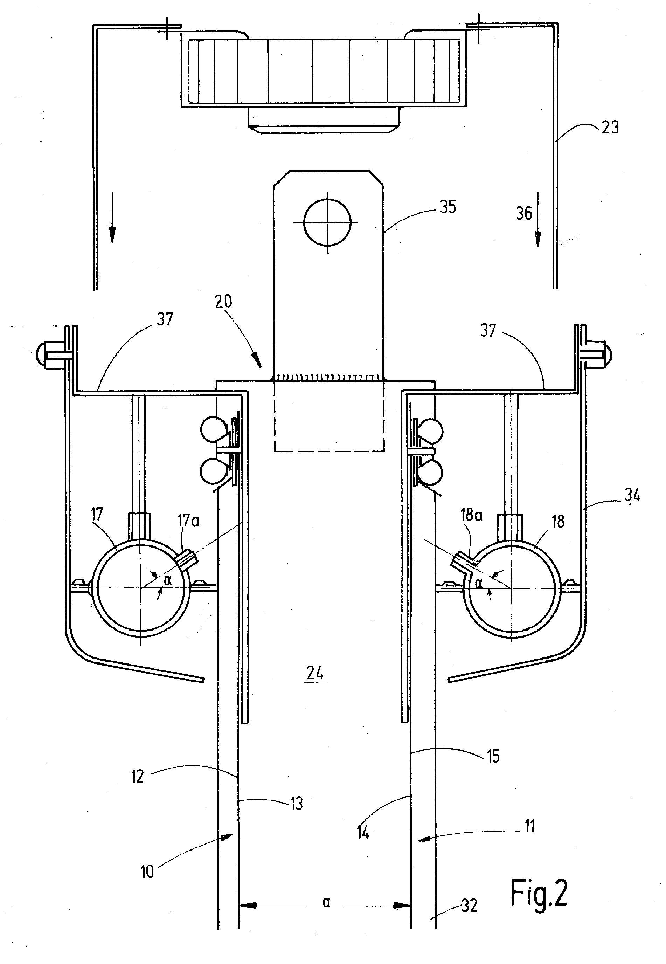

Die Fig. 2 zeigt eine schematische Querschnittsansicht entlang der in Fig. 1 gezeigten Schnittlinie A - A. In Fig. 2 sind die einzelnen Wärmeübertragungsflächen 12, 13, 14, 15 und ebenfalls der Hohlraum 24 dargestellt. Ebenfalls in Fig. 2 dargestellt sind die beiden Verteilelemente 17 und 18 mit Düsen 17a, 18a. Der Ventilatorkasten 23 ist im nicht montierten Zustand dargestellt. Pfeile 36 zeigen die Montagerichtung des Ventilatorkastens 23. In Fig. 2 sind des Weiteren zwei Tragwinkel 37 dargestellt, an denen je eine Abdeckplatte 34 für die Verteilelemente 17, 18 und die Verteilelemente 17, 18 befestigt sind. Die Wärmeübertragungselemente 10, 11 sind ebenfalls jeweils an den Tragwinkel 37 befestigt.

Der Abstand a zwischen den Wärmeübertragungsflächen 13 und 14 ist beispielsweise so gewählt, dass bei einem angestrebten Luftvolumenstrom von 600 m³/h im Konvektionswärmeaustausch immer noch Luftströmungsverhältnisse von unter 2 m/s herrschen. In dieser Ausführungsform bei einer wirksamen Membranbreite, d. h. bei einer Breite der Wärmeübertragungsfläche von 1200 mm ergibt sich demnach ein Abstand von 70 mm.

Durch die Anordnung einer entsprechend großen Anzahl von den Düsen 17a, 18a über die Breite der Wärmeübertragungsfläche 12, 15 (Membran) wird die Bildung eines Wasserfilms erzielt. Bewährt hat sich ein Düsenabstand von 50mm bei einem freien Düsenquerschnitt von 2 bis 3 mm. Der Querschnitt der Verteilelemente 17, 18 sollte mindestens das 2,5- fache der Gesamtsumme der Düsenquerschnitte betragen, damit durch eine entsprechende Differenz zwischen den Fließgeschwindigkeiten in den Düsen 17a, 18a und in den Verteilelementen 17, 18 sich über den Druckraumeffekt eine gleichmäßige Fluidverteilung über die Länge des Verteilelementes ausbildet.

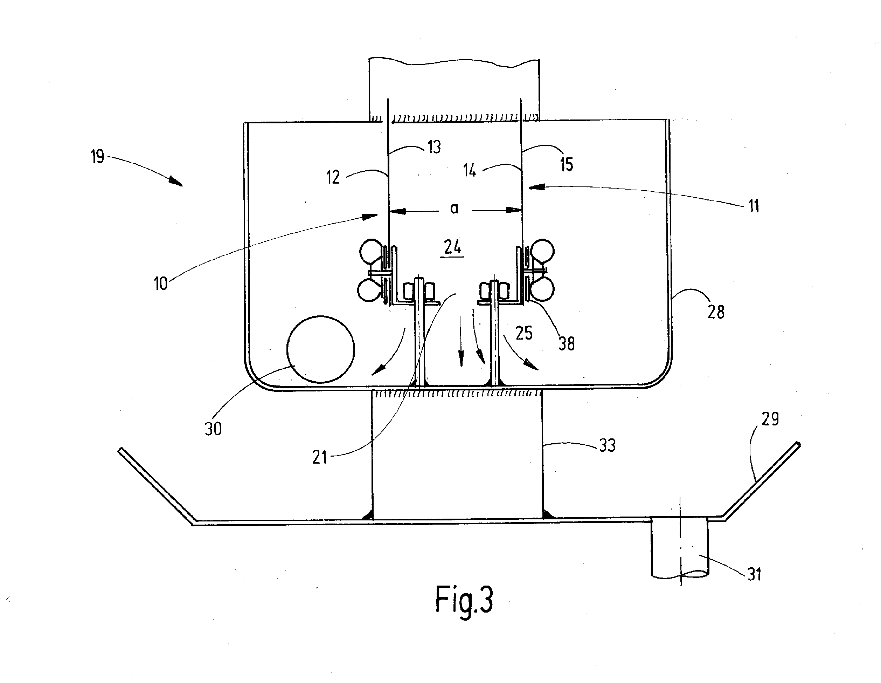

Die Fig. 3 zeigt eine schematische Querschnittsansicht entlang der in Fig. 1 gezeigten Schnittlinie B - B. Fig. 3 zeigt ebenfalls die einzelnen Wärmeübertragungsflächen 12, 13, 14, 15 und den Hohlraum 24. Ferner sind in Fig. 3 eine quergeschnittene Seitenansicht des Sammelbereichs 19 dargestellt. Der Sammelbereich 19 umfasst eine erste Auffangwanne 28 und eine zweite Auffangwanne 20. Das flüssige Wärmeübertragungsmedium fließt in Form eines dünnen Fluidfilms an den Wärmeübertragungsflächen 12, 15 herab und in die erste Auffangwanne 28 hinein. Das in der ersten Auffangwanne gesammelte flüssige Wärmeübertragungsmedium wird über die Abflüsse 30 aus dem Sammelbereich 19 abgeführt. Die unterhalb der ersten Auffangwanne angeordnete, zweite Auffangwanne sammelt das an der Außenoberfläche der ersten Auffangwanne anfallende Kondensat und das in der zweiten Auffangwanne gesammelte Kondensat wird über die Abflüsse 31 aus dem Sammelbereich 19 abgeführt. Die Wärmeübertragungselemente 10, 11 sind jeweils an einem Stützelement 38 befestigt.

Die Erfindung beschränkt sich in ihrer Ausführung nicht auf das vorstehend angegebene bevorzugte Ausführungsbeispiel. Vielmehr ist eine Anzahl von Varianten denkbar, welche von der dargestellten Lösung auch bei grundsätzlich anders gearteten Ausführungen Gebrauch macht. Sämtliche aus den Ansprüchen, der Beschreibung oder den Zeichnungen hervorgehenden Merkmale und/oder Vorteile, einschließlich konstruktiver Einzelheiten und räumlicher Anordnungen können sowohl für sich als auch in den verschiedensten Kombinationen erfindungswesentlich sein.

### Bezugszeichenliste

- 100: Vorrichtung zur lokalen Beeinflussung von Temperatur und Feuchte
- 10: erstes Wärmeübertragungselement
- 11: zweite Wärmeübertragungselement
- 12: erste Wärmeübertragungsfläche
- 13: zweite Wärmeübertragungsfläche
- 14: dritte Wärmeübertragungsfläche
- 15: vierte Wärmeübertragungsfläche
- 16: flüssiges Wärmeübertragungsmedium
- 17: erstes Verteilelement
- 17a: Düse
- 18: zweites Verteilelement
- 18a: Düse
- 19: Sammelbereich
- 20: kopfseitge Öffnung
- 21: fußseitge Öffnung
- 22: erstes Mittel zur Verstärkung der Konvektionswirkung im Hohlraum
- 23: zweites Mittel zur Verstärkung der Konvektionswirkung im Hohlraum
- 23a: Ventilator
- 24: Hohlraum
- 25: Luftstromrichtung
- 26: Strömungsrichtung des flüssigen Wärmeübertragungsmediums
- 27: Stabilisierungselement
- 28: erste Auffangwanne
- 29: zweite Auffangwanne
- 30: erster Abfluss
- 31: zweiter Abfluss
- 32: erstes Stützelement
- 33: zweites Stützelement
- 34: Abdeckplatte
- 35: Montageelement
- 36: Montagerichtung
- 37: Tragwinkel
- 38: Stützelement
- a: horizontaler Abstand

## Patentansprüche

1. Vorrichtung (100) zur lokalen Beeinflussung von Temperatur und Feuchte in einem Raum, insbesondere im Industriebereich umfassend mindestens ein Wärmeübertragungselement (10) mit mindestens zwei Wärmeübertragungsflächen (12, 13), ein flüssiges Wärmeübertragungsmedium (16), mindestens ein Verteilelement (17) und einen Sammelbereich (19), vorzugsweise in Form einer Wanne, **dadurch gekennzeichnet, dass** die Vorrichtung (100) einen offenen Hohlraum (24), insbesondere zur Bildung eines Luftkanals, und kopf- und fussseitge Öffnungen (20, 21) aufweist, wobei an den Hohlraum (24) die mindestens eine Wärmeübertragungsfläche (13) angrenzt, und wobei die Öffnungen (20, 21) in den Hohlraum (24) münden, und dass das mindestens eine Verteilelement (17) zum Verteilen des flüssigen Wärmeübertragungsmediums (16) auf die mindestens eine Wärmeübertragungsfläche (12) mindestens eine Düse (17a) aufweist, die um einen Winkel (α) gegenüber einer zur Wärmeübertragungsfläche (12) senkrechten Achse geneigt ist.

2. Vorrichtung nach Anspruch 1, **dadurch gekennzeichnet, dass** die mindestens eine an den Hohlraum (24) angrenzende Wärmeübertragungsfläche (13) als eine Konvektionsfläche ausgebildet ist.

3. Vorrichtung nach Anspruch 1 oder 2, **dadurch gekennzeichnet, dass** die mindestens eine Wärmeübertragungsfläche (12) plattenförmig ausgebildet ist.

4. Vorrichtung nach einem der Ansprüche 1 bis 3, **dadurch gekennzeichnet, dass** mindestens zwei Wärmeübertragungselemente (10, 11) vorgesehen sind, wobei mindestens zwei Wärmeübertragungsflächen (13, 14) an den Hohlraum angrenzen.

5. Vorrichtung nach Anspruch 4, **dadurch gekennzeichnet, dass** sich die Wärmeübertragungselemente (10, 11) gegenüberliegend angeordnet sind, wobei die Wärmeübertragungselemente (10, 11) vorzugsweise in einem definierten Abstand a im Wesentlichen parallel zueinander angeordnet sind.

6. Vorrichtung nach einem der Ansprüche 1 bis 5, **dadurch gekennzeichnet, dass** die Vorrichtung ein erstes Mittel (22) zur Verstärkung der Konvektionswirkung im Hohlraum (24), vorzugsweise mindestens ein Luftleitelement, insbesondere mindestens einen Luftleitwinkel, zur Lenkung der Luftströmung im Hohlraum (24) umfasst.

7. Vorrichtung nach einem der Ansprüche 1 bis 6, **dadurch gekennzeichnet, dass** die Vorrichtung ein zweites Mittel (23) zur Verstärkung der Konvektionswirkung im Hohlraum (24), vorzugsweise einen Ventilatorkasten mit mindestens einem Ventilator (23a), aufweist, wobei die Leistung des mindestens einen Ventilators (23a) durch Drehzahlsteuerung regelbar ist.

8. Vorrichtung nach einem der Ansprüche 1 bis 7, **dadurch gekennzeichnet, dass** das mindestens eine Verteilelement (17) das flüssige Wärmeübertragungsmedium (16) auf die mindestens eine dem Hohlraum (24) abgewandten Außenoberfläche der mindestens einen Wärmeübertragungsfläche (12) verteilt.

9. Vorrichtung nach einem der Ansprüche 1 bis 8, **dadurch gekennzeichnet, dass** an dem mindestens einen Wärmeübertragungselement (10) mindestens zwei Stabilisierungselemente (27) zur Stabilisierung eines dünnen Fluidfilms auf der Wärmeübertragungsfläche (12) angebracht sind.

10. Vorrichtung nach Anspruch 9, **dadurch gekennzeichnet, dass** die Stabilisierungselemente (27) über die komplette Höhe der Wärmeübertragungsfläche (12) angebracht sind.

11. Vorrichtung nach Anspruch 9 oder 10, **dadurch gekennzeichnet, dass** die Stabilisierungselemente (27) formschlüssig und/oder wasserdicht mit der Wärmeübertragungsfläche (12) verbunden sind.

12. Vorrichtung nach einem der Ansprüche 9 bis 11, **dadurch gekennzeichnet, dass** die Dicke der Stabilisierungselemente (27) je nach gewünschter Fluidfilmdicke des flüssigen Wärmeübertragungsmediums (16) einstellbar ist.

13. Vorrichtung nach einem der Ansprüche 1 bis 12, **dadurch gekennzeichnet, dass** der Sammelbereich (19) mit mindestens einem Abfluss (29) vorgesehen ist, so dass das flüssige Wärmeübertragungsmedium (16) aus dem Sammelbereich (19) wieder abführbar ist.

14. Vorrichtung nach einem der Ansprüche 1 bis 13, **dadurch gekennzeichnet, dass** das mindestens eine Verteilelement (17) röhrenförmig ausgebildet ist.

15. Vorrichtung nach Anspruch 14, **dadurch gekennzeichnet, dass** der Querschnitt des Verteilelementes (17) mindestens das 2,5 fache der Gesamtsumme der Düsenquerschnitte beträgt.

16. Vorrichtung nach einem der Ansprüche 1 bis 15, **dadurch gekennzeichnet, dass** das Verteilelement (17) mindestens zwei Düsen (17a) aufweist, die bevorzugt voneinander definiert beabstandet sind.

17. Vorrichtung nach einem der Ansprüche 1 bis 16, **dadurch gekennzeichnet, dass** das flüssige Wärmeübertragungsmedium (16) Wasser ist.

18. Vorrichtung nach einem der Ansprüche 1 bis 17, **dadurch gekennzeichnet, dass** die Vorrichtung (100) einen Werkstoff, insbesondere Edelstahl, besonders bevorzugt Aluminium umfasst, der vorzugsweise eine gute Korrosionsbeständigkeit aufweist.

19. Vorrichtung nach einem der Ansprüche 1 bis 18, **dadurch gekennzeichnet, dass** die Vorrichtung (100) bodenstehend oder hängend montierbar ist.
